# EUROPEAN PATENT SPECIFICATION

(11) **EP 4 334 404 B1**
(45) Date of publication and mention of the grant of the patent: **04.06.2025**
(21) Application number: 21801651.7
(22) Date of filing: 28.10.2021
(51) Int. Cl.: C09D 11/54, D06P 1/00, D06P 1/52, D06P 5/30, D06P 1/44

(54) **PRETREATMENT FORMULATIONS FOR DIGITAL PRINTING**
VORBEHANDLUNGSFORMULIERUNGEN FÜR DEN DIGITALDRUCK
FORMULATIONS DE PRÉTRAITEMENT POUR L'IMPRESSION NUMÉRIQUE

(30) Priority: 05.05.2021 WO PCT/IL2021/050516
(43) Date of publication of application: 13.03.2024
(73) Proprietor: Nur Ink Innovations Ltd, Rosh Ha-Ayin 4809154 (IL)
(72) Inventor: HERMAN GOLAN, Lior, 4726009 Ramat Hasharon (IL); LEVI, Koren, 45870 Moshav Hagor (IL); IRAQI, Muhammad, 4491500 Tira (IL)
(74) Representative: Gregson, Anna Louise
(86) International application number: PCT/IL2021/051283
(87) International publication number: WO 2022/234553

(56) References cited:
- WO-A1-2020/131026
- WO-A1-2020/145988
- CN-A- 106 498 721
- JP-A- 2002 317 116

## Description

### TECHNOLOGICAL FIELD

The invention generally concerns pretreatment formulations for printing.

### BACKGROUND

Fabrics and other textile materials have been used as substrates for inkjet printing and have proven to present a challenge due to their structure (e.g., presence of interstitial spaces between the fibers) and fibers' composition. Without the ability of an ink or a pigment to securely associate to or penetrate the fabric, the resulting printed image may be deficient.

When using digital printing, including inkjet, to form patterns on fabrics and textiles, the image that is generated may appear to have a low color intensity, fuzziness, especially at the edges of the pattern or image, resulting mainly from penetration of the ink or pigment into the fibers.

Many technologies have been developed over the years in an attempt to at least partially overcome these difficulties. Some of these technologies offer the use of cationic polymers, fabric softeners or particles, while others offer improvements in the printing process rather than in treating the substrate, e.g., textile or fabric.

Thus, there still exists a need to provide a printed pattern that not only securely adheres to the fabric surface, but also presents a high print quality, wash-fastness, and mechanical durability, minimizing loss in tensile strength and enhancing tear resistance in case of resin finished fabrics.

### BACKGROUND ART

**[1]** International Patent Publication No. WO2019/077615;
**[2]** Japanese Patent Application No. 2017/036400;
**[3]** International Patent Publication No. WO2011/159274;
**[4]** US Patent Application No. 2016/032523;
**[5]** International Patent Publication No. WO2015/130498;
**[6]** US Patent Application No. 2019/257030;
**[7]** US Patent Application No. 2020/115841; and
**[8]** International Patent Publication No. WO2020/046341.

### GENERAL DESCRIPTION

The need to provide a coating material or a pretreatment material that can enhance receptivity of an ink to different fabric and textile surfaces has been met by the technology disclosed herein, which generally provides not only the means to enhance receptivity of an ink to the substrate, but also by providing a continuum three-dimensional surface on which the ink may be applied. Such a continuum surface overcomes the difficulties associated with printing directly on a textile or a fabric, by filling up and thereby erasing interstitial spaces between the fibers and forming receptive surfaces that are better suited to receive the printed images.

The technology subject of the invention disclosed herein is based on the inventors' discovery that certain cured-pretreatment formulations for wet-on-dry digital printing applications exhibit higher whiteness intensity and process color vividness and brilliance when formed into printed patterns, while facilitating enhanced pattern durability and adhesion onto a substrate. The strong adherence of the printed patterns to the substrate is specifically manifested at low ink-coverage areas that exhibit substantially higher wash-resistance compared to other pretreatment formulations. The cured pretreatment provides a 3D cushion or matrix onto which ink patterns may be formed. The pretreatment formulations of the invention may be used on any substrate on the surface of which printing, or image forming is desired.

It was surprisingly found that these pretreatment formulations when cured to receive thereon an ink, shortened the ink-curing duration step, and also lowered the required ink-curing temperature. Modifying the ink-curing step parameters resulted in a higher whiteness to white printed patterns. Onto dark garments, this phenomenon was reflected with higher L* values at the white printed patterns as well as higher color vividness and brilliance for CMYK patterns, as these process colors are printed onto a white-base layer. Furthermore, the use of the cured-pretreatment imparting superior chemical durability and wash-fastness particularly to printed patterns of lower white-ink coverage, endowed the surface with superior patterning capabilities, opening the door for using a vast variety of printing ink formulations.

To determine the whiteness of the patterned prints, CIELAB color characterization system was adopted, wherein the color-space was defined by three axes L*, a* and b*. The L* values express the perceptual lightness, while setting black at 0 and white at 100. Elevated L* values of the printed patterns or images were noticeable upon treating the substrate with formulations of the invention. It was surprisingly found that in case of textile substrates, these L* values further increased (1-3 units) after washing the printed textile in a laundry machine.

Thus, the present application concerns a provision of surface pretreatment for digital printing. Use of pretreatment formulations of the invention onto a textile surface results in a strongly adhered pattern, characterized by a high tensile strength, elastic properties, mechanical durability, such as wet and dry abrasion resistance combined with permanent finishing properties of smooth hand-feel, as well as other superior characteristics.

In a first aspect thereof, the invention provides an aqueous pretreatment formulation (or an immobilization preparation or a mixture) comprising
**(i)** at least one metal salt,
**(ii)** a polymeric mixture of polymers, copolymers, or both,
**(iii)** an ammonium salt,
**(iv)** an epichlorohydrin-modified polyamide, and
**(v)** optionally at least one polycarbodiimide.

Formulations of the invention are aqueous formulations comprising water and optionally a co-solvent that is water miscible. The co-solvent may be an organic solvent such as an alcohol or a glycol ether.

As formulations of the invention are pretreatment formulations, they are configured for application directly on a surface region of a substrate, e.g., a textile. Therefore, formulations of the invention need not contain any dye material, pigment, or other coloring agent. Formulations of the invention are thus not ink formulations. Additionally, formulations of the invention are free of organic acids or organic bases, organic starch and starch salts, isocyanate materials borates and borate salts.

The at least one metal salt used in formulations of the invention is any ionic form of a metal when provided with at least one organic or inorganic anion.

The at least one metal salt may be provided as a single salt or as a combination of two or more salts. The selection of which salt is used, and whether the salt is provided as a single component or as a combination of salts (namely one or more salts) may depend on a variety of factors, including, *inter alia*, on its solubility in water or in a medium containing water and a co-solvent and its ability to form a receptive layer in conjugation with the formulation components, namely the polymer system; thus, contributing to ink fixation onto the substrate.

The at least one salt may be selected from monovalent metal salts, divalent metal salts, trivalent metal salts and combinations thereof. The metal may be sodium, calcium, aluminum, copper, zinc, cobalt, nickel, magnesium, and others.

The anion used as the counter ion can be an inorganic anion or an organic anion. In some embodiments, the metal salt is at least one inorganic salt and thus the anion component of the metal salt is an inorganic anion which may optionally be a chloride, a fluoride, a bromide, an iodide, a nitride, a sulfate, or phosphate anion.

Examples of suitable metal salts of monovalent cations include (inorganic and organic anions), but are not limited to, lithium chloride, lithium acetate, lithium carbonate, lithium nitrate, lithium phosphate, sodium chloride, sodium acetate, sodium carbonate, sodium nitrate, sodium phosphate, potassium acetate, potassium chloride, potassium carbonate, potassium phosphate, potassium nitrate, copper chloride, copper nitride, copper sulfate, copper acetate, copper citrate, copper propionate, copper phosphate, silver chloride, silver nitride, silver sulfate, silver acetate, silver citrate, silver propionate, silver phosphate, gold chloride, gold nitride, gold sulfate, gold acetate, gold citrate, gold propionate, and gold phosphate.

Examples of suitable salts of divalent cations include (inorganic and organic anions), but are not limited to, magnesium chloride, magnesium acetate, magnesium carbonate, magnesium nitrate, magnesium phosphate, calcium chloride, calcium acetate, calcium carbonate, calcium nitrate, calcium nitrate, calcium phosphate, zinc chloride, zinc acetate, zinc carbonate, zinc nitrate, zinc phosphate, copper chloride, copper acetate, copper carbonate, copper nitrate, copper phosphate, tin chloride, tin acetate, tin carbonate, tin nitrate, tin phosphate, ferrous chloride, ferrous acetate, ferrous carbonate, ferrous nitrate, ferrous phosphate, and combinations thereof.

In some embodiments, the salt is a calcium salt. Non-limiting examples of calcium salts include CaCl₂, CaF₂, CaBr₂, CaI₂, calcium carbonate and mixed halide salts such as CaIBr, CaClBr and others.

In some embodiments, the at least one inorganic salt is provided alone or in combination with one other salt, wherein the at least one other salt may or may not be an inorganic salt.

In some embodiments, the metal salt comprises an organic anion. Such organic anions may be provide metal (M) carbonates, e.g., selected from M₂CO₃, MCO₃, M₂(CO₃)₃, M(CO₃)₂, M₂(CO₃)₂, M(CO₃)₃, M₃(CO₃)₄, M(CO₃)₅, M₂(CO₃)₇; metal carbonate hydrates, e.g., selected from M₂CO₃-xH₂O, MCO₃·xH₂O, M₂(CO₃)₃-xH₂O, M(CO₃)₂·xH₂O, M₂(CO₃)₂·xH₂O, M(CO₃)₃-xH₂O, M₃(CO₃)₄-xH₂O, M(CO₃)₅·xH₂O, and M₂(CO₃)₇-xH₂O, wherein x varies based on the nature of the metal; metal carboxylates (abbreviated RCO₂⁻, and including acetates), e.g., selected from MRCO₂, M(RCO₂)₂, M(RCO₂)₃, M(RCO₂)₄, M(RCO₂)₅, and M(RCO₂)₆; metal carboxylate hydrates (abbreviated RCO₂⁻), e.g., selected from MRCO₂·xH₂O, M(RCO₂)₂·xH₂O, M(RCO₂)₃· xH₂O, M(RCO₂)₄·xH₂O, M(RCO₂)₅·xH₂O, and M(RCO₂)₆·xH₂O, wherein x varies based on the nature of metal; metal carboxylate (the group RCOO⁻, R is aliphatic chain, which may be saturated or unsaturated), e.g., selected from CH₃CH=CHCOOM (metal crotonate), CH₃(CH₂)₃CH=CH(CH₂)₇COOM (metal myristoleate), CH₃(CH₂)₅CH=CH(CH₂)₇COOM (metal palmitoleate), CH₃(CH₂)₈CH=CH(CH₂)₄COOM (metal sapienate), CH₃(CH₂)₇CH=CH(CH₂)₇COOM (metal oleate), CH₃(CH₂)₇CH=CH(CH₂)₇COOM (metal elaidate), CH₃(CH₂)₅CH=CH(CH₂)₉COOM (metal vaccinate), CH₃(CH₂)₇CH=CH(CH₂)₁₁COOM (metal erucate), C₁₇H₃₅COOM (metal stearate); metal acetates, e.g., (the group CH₃COO⁻, abbreviated AcO⁻) selected from AcOM, AcO₂M, AcO₃M, and AcO₄M; metal acetate hydrates, (the group CH₃COO⁻, abbreviated AcO⁻), e.g., selected from AcOM·xH₂O, AcO₂M·xH₂O, AcO₃M·xH₂O, and AcO₄M·xH₂O, wherein x varies based on the nature of the metal; metal acetylacetonates (the group C₂H₇CO₂⁻, abbreviated AcAc⁻), e.g., selected from AcAcM, AcAc₂M, AcAc₃M, and AcAc₄M; metal acetylacetonate hydrates (the group C₂H₇CO₂⁻, abbreviated AcAc⁻), e.g., selected from AcAcM·xH₂O, AcAc₂M·xH₂O, AcAc₃M·xH₂O, and AcAc₄M·xH₂O, wherein x varies based on the nature of the metal; metal cyanates, e.g., selected from MCN, M(CN)₂, M(CN)₃, M(CN)₄, M(CN)₅, M(CN)₆; metal cyanate hydrates, e.g., selected from MCN·xH₂O, M(CN)₂·xH₂O, M(CN)₃·xH₂O, M(CN)₄·xH₂O, M(CN)₅·xH₂O, and M(CN)₆·xH₂O, wherein x varies based on the nature of the metal; metal alkyls; metal alkoxides; and others.

In some embodiments, the at least one metal salt being an organic and/or an inorganic salt is provided in combination with an ammonium salt, wherein the salt anion is selected from a chloride, a fluoride, a bromide, an iodide, a nitride, a sulfate, acetate, a citrate, or a propionate.

The amount of the at least one metal salt in formulations of the invention is selected to reduce negative effects that may be induced due to high salt content. For example, salt concentrations higher than 18 wt%, relative to the total weight of the formulation, will induce weak adhesion of the printed pattern to the substrate, owning to poor penetration of the ink into the fibers in the case of a textile substrate, resulting in poor wash-fastness. Thus, formulations of the invention do not comprise a metal salt or a metal salt combination in an amount that exceeds 18wt%. In some embodiments, the amount of the at least one metal salt, as defined, may be as low as 0.5wt%. In some embodiments, the amount of the at least one metal salt is thus between 0.5 and 18 wt%.

In some embodiments, formulations of the invention comprise
**(i)** at least one metal salt, being in some embodiment selected from calcium salts, such as CaCl₂, CaF₂, CaBr₂, CaI₂, calcium carbonate and others, wherein the amount of the salt does not exceed 18wt% or is at least 0.5wt% or is between 0.5 and 18wt%;
**(ii)** a polymeric mixture of polymers, copolymers or both,
**(iii)** an ammonium salt,
**(iv)** an epichlorohydrin-modified polyamide, and
**(v)** optionally at least one polycarbodiimide.

The polymeric mixture is a combination of two or more polymeric components which may be present as polymers or copolymers and which are selected to permit dot gain adjustment, allowing distinct ink drop demarcation; thereby, enabling high-resolution precision of the printed pattern. Putting it differently, the copolymer, polymer or polymer mixture is typically provided as a dispersion which comprises as least one "***anti-migration polymer***", namely at least one polymeric material that when applied to a surface, it prevents migration or smearing of an ink pattern formed thereon. The anti-migration polymer may be selected to prevent migration or movement of the ink drop once applied, to thereby prevent distortion of a printed pattern, mixing of inks of different colors and loss of resolution and print quality. The anti-migration polymer may be a neutral polymer, an amphiphilic polymer, an anionic polymer, non-ionic or slightly cationic polymer, as known in the art. The anti-migration polymer dispersion may be selected to have a clear visuality and a low to high molecular weight. The molecular weight may be between 10 and 80 kDa or may be between 20 and 60kDa or between 30 and 50 kDa or 40 and 50kDa, or generally selected to allow a better dispersibility in its medium.

The selection of specific polymer dispersions may depend on the ink formulation that is used, the nature of the substrate onto which the anti-migration polymer dispersion is to be applied, on the printing method (e.g., wet-on-dry) as well as on other parameters known to a person versed in the art. The polymeric components making up the polymeric mixture may thus be selected from a variety of polymer (and copolymer) families. Non-limiting examples of such polymers include polyurethane polymers and copolymers, acrylic polymers and binders (such as copolymers of vinyl acetate and an acrylate monomer, most commonly butyl acrylate, sodium polyacrylate, styrene acrylate, polyacrylamide, urethane acrylates, polyester acrylates, epoxy acrylates), cellulosic materials, polymers and copolymers of polyacrylate (such as without limitation ethyl acrylate, propyl acrylate), polymers and copolymers of diallyldialkylammonium monomers, poly amide-epichlorohydrin copolymer, polypropylene polymers and copolymers (polypropylene glycol, propylene oxide), polyethylene copolymer (such as without limitation ethylene vinyl acetate copolymer (EVA), acetate binders (such as vinyl acetate (polyvinyl acetate homopolymer, copolymers of vinyl acetate and ethylene, vinyl chloride vinyl acetate co-polymer), calcium acetate), polyethylene glycol (PEG), copolymers of ethylene oxide) or butylene oxide, polyvinyl polymers (such as without limitation polyvinyl methyl ethers, polyvinylpyrrolidone (PVP), polyvinyl alcohol (PVA)) and others.

In some embodiments, the anti-migration polymer is at least one polyurethane polymer or a copolymer. In some embodiments, the anti-migration polymer is provided as a mixture of polymers or of polymer dispersions with one or more other components.

In some embodiments, the anti-migration polymer is a polymer or a copolymer of polyacrylate (such as ethyl acrylate and propyl acrylate).

In some embodiments, the anti-migration polymer is a polymer or a copolymer of diallyldialkylammonium.

In some embodiments, the anti-migration polymer is a polymer or a copolymer of polypropylene (such as polypropylene glycol and propylene oxide).

In some embodiments, the anti-migration polymer is a polymer or a copolymer of polyethylene (such as ethylene vinyl acetate copolymer (EVA), polyethylene glycol (PEG), copolymers of ethylene oxide).

In some embodiments, the anti-migration polymer is a polymer or a copolymer of polyvinyl (such as polyvinyl methyl ethers, polyvinylpyrrolidone (PVP) and polyvinyl alcohol (PVA)).

In some embodiments, the polymeric mixture comprises an acetate polymer (or acetate binder, as known in the art).

In some embodiments, the polymeric mixture comprises an acrylic polymer (or acrylic binder, as known in the art).

In some embodiments, the polymeric mixture comprises an acetate and/or an acrylic polymer (or binder).

In some embodiments, the polymeric mixture comprises a polyurethane polymer or copolymer.

In some embodiments, the polymer mixture comprises one or more polymers selected from polyurethanes, cellulosic materials, polyacrylates, polypropylene, polyethylene and others. In some embodiments, the polymer mixture comprises a mixture of polyurethane. In some embodiments, the polymer mixture comprises one or more of the polymers mentioned herein, e.g., polymers selected from polyurethanes, ethyl acrylate, propyl acrylate, poly amide-epichlorohydrin, polypropylene glycol, propylene oxide, ethylene vinyl acetate copolymer (EVA), polyethylene glycol (PEG), butylene oxide, polyvinyl methyl ether, polyvinylpyrrolidone (PVP), polyvinyl alcohol (PVA)) and others, as well as acrylic binder, and acetate binder.

In some embodiments, the copolymer, a polymer or polymer mixture is cationic. Alternatively, and depending on the characteristics desired, the polymer selected may be neutral, amphiphilic, non-ionic, anionic or only slightly cationic, as known in the art.

In some embodiments, the polymer mixture, comprising, e.g., a polyurethane or a mixture of polyurethanes, or a binder such as an acetate or acrylic polymer, may be used in combination with at least one salt, such as a calcium salt. The combination may comprise the polymer or binders, e.g., an anti-migration polymer in an amount between 0.5 and 18wt%.

Thus, in some embodiments, formulations of the invention comprise
**(i)** at least one metal salt, being in some embodiments selected from calcium salts, such as CaCl₂, CaF₂, CaBr₂, CaI₂, calcium carbonate and others, wherein the amount of the salt does not exceed 18wt% or is between 0.5 and 18wt%;
**(ii)** a polymeric mixture comprising at least one polymer, copolymer or binder, selected as herein, wherein in some embodiments, the mixture comprises an acetate binder and/or an acrylic binder;
**(iii)** an ammonium salt,
**(iv)** an epichlorohydrin-modified polyamide, and
**(v)** optionally at least one polycarbodiimide.

As stated herein, in some configurations of formulations of the invention, polycarbodiimide crosslinkers may be utilized. The polycarbodiimides are selected to increase strengthening of a network formed by the polymer mixture during curing of the polymeric mixture, initiating the chemical reaction at room-temperature while enabling fast curing upon drying. The reactivity of the polycarbodiimides towards carboxylic groups hydrates the formulation by converting the carboxylic acids moieties present on the polymer materials to esters or amides. Polycarbodiimides also function as crosslinkers for aqueous acrylic and acetate polymers that can be found within the polymer mixture of the formulation, while free carbodiimide sites that did not contribute to the dense network structure of the cured-pretreatment matrix are able to react chemically with polyurethane dispersions that may be found within the ink formulation. Accordingly, through their synergistic effect, these crosslinkers formulate a connective matrix between the substrate pretreated surface and the printed pattern.

The pretreatment formulations of the invention are absent of chemical stimuli agents such as organic and in organic acids or bases, as disclosed herein. Specifically, acids, especially organic acids that contain carboxylic groups are excluded from the formulations. To achieve optimal prolonged utility of the aqueous formulation (pre-curing), pH above 8 is preferred. Active insertion of acids may shorten the polycarbodiimide functionality, especially those having carboxylic groups that react with carbodiimides groups at ambient conditions.

In other words, the presence of a polycarbodiimide crosslinker results in a pot-life span of weeks to months, depending on the chemical nature of the other components present in formulations of the invention. Prolonged use of the pretreatment can be achieved by curing the formulation onto a substrate, thus enabling printing on the same substrate approximately up to one- or two-months post-treatment

Generally, formulating a combination of a polymer mixture and the polycarbodiimide enables low-temperature curing. Where heat is needed to achieve a desired degree of curing, the polycarbodiimide may be selected to undergo crosslinking upon exposure to heat, IR or UV radiation, or to any other means. Typically, temperatures ranging between room temperature (20-35°C) and 150°C, or between room temperature and about 100-110°C may be used. According to some embodiments, the low temperatures are temperatures below 70°C, or below 60°C, or below 50°C, or below 40°C, or below 30°C or at a temperature between room temperature and 80°C.

In some embodiments, the pretreatment formulation comprises at least one polycarbodiimide crosslinker, being optionally selected amongst commercially available carbodiimide formulations or materials. Some polycarbodiimide of interest may not be commercially available and therefore have to be synthesized from various monomers. Non-limiting examples of commercially available carbodiimides are Stahl Picassian^{®} XL-752, Nisshinbo Chemical Inc. CARBODILITE SV-02, CARBODILITE V-10, CARBODILITE E-02, CARBODILITE E-05, CARBODILITE V-04.

In some embodiments, the polycarbodiimide is provided as an aqueous suspension of the material or as a suspension of a particulate matter comprising or associated with the material.

The cured pretreatment formulation is selected to undergo self-crosslinking (partially or full) and further crosslinking with the substrate material (e.g., fabric or textile) and optionally also with components present in the ink formulation or any other formulation or component added thereto.

The ammonium salt present in formulations of the invention is selected to prompt the cationic characteristics of the pretreatment and therefore the ammonium counterion is suitably selected. In some embodiments, the ammonium salt is an ammonium halide, e.g., ammonium chloride. Other ammonium salts may include ammonium carbonate; ammonium sulfate; or quaternary ammonium compounds containing alkyl chains of various lengths and substitutions, e.g., benzalkonium chloride, cetylpyridinium chloride, dofanium chloride, benzethonium chloride, methylbenzethonium chloride, cetalkonium chloride, didecyldimethylammonium chloride, (1-butyl)triethylammonium bromide, (1-decyl)trimethylammonium bromide, (1-dodecyl)trimethylammonium bromide, (1-dodecyl)trimethylammonium chloride, (1-hexadecyl)trimethylammonium bromide, (1-hexadecyl)trimethylammonium chloride, (1-hexyl)trimethylammonium bromide, (1-tetradecyl)trimethylammonium bromide, (1-tetradecyl)trimethylammonium chloride, (2-chloroethyl)trimethylammonium chloride, (2-hydroxyethyl)trimethylammonium dimethyl phosphate, 2-(methacryloyloxy)ethyltrimethylammonium chloride, acetyl beta-methylcholine bromide, acetylcholine iodide, allyltriethylammonium bromide, ammonium formate, ammonium tartrate, ammonium oxalate monohydrate, ammonium trifluoroacetate, benzyldimethylhexadecylammonium chloride, benzyldimethyl-n-dodecylammonium chloride, benzyltriethylammonium bromide, benzyltriethyl ammonium chloride, benzyltriethylammonium dichloroiodate, benzyltriethyl ammonium tetrafluoroborate, benzyltrimethylammonium bromide, benzyltrimethyl ammonium chloride, benzyltrimethylammonium dichloroiodate, benzyltrimethyl ammonium hydroxide, benzyltrimethylammonium hydroxide, benzyltrimethyl ammonium iodide, benzyltrimethylammonium tribromide, benzyltri-n-butylammonium bromide, benzyltri-n-butylammonium chloride, benzyltri-n-propylammonium chloride, bis(triphenylphosphine)iminium trifluoroacetate, bis(triphenylphosphoranylidene)ammonium chloride, (chloromethylene) dimethylammonium chloride, [(cyclohexylammonium) methyl]trifluoroborate internal salt, 3-bromocamphor-8-sulfonic acid ammonium salt, and others.

In some embodiments, the ammonium salt is ammonium chloride.

The amount of the ammonium salt in formulations of the invention does not exceed 0.9wt% or is between 0.005 and 0.9wt%.

The epichlorohydrin-modified polyamide or epichlorohydrin polyamide copolymer or polymer is utilized as a shrinking inhibitor. As such, the material is selected to improve the mechanical and moisture stability of the substrate. The material is a conjugate of epichlorohydrin and a polyamide copolymer or prepolymer that is capable of improving the water resistance and adhesion properties.

The amount of the epichlorohydrin-polyamide material does not exceed 0.45wt% or is between 0.005 and 0.45% w/w.

As noted herein, the metal salt component serves as the fixating agent as its weight percentage within the formulation defines the ink drop permeability into an absorptive substrate or rather determines the ink layers stack up aptitude onto absorptive and non-absorptive substrates. The epichlorohydrin-modified polyamide, as a fiber-active component functions as a shrinking inhibitor.

The pretreatment formulations of the invention are configured and selected to define a receptive film on a substrate, such as fabrics, plastics or polymeric, and others as defined herein, onto which ink formulations may be applied. As such, each of the many formulations disclosed herein may be specifically tailored to meet one or more prerequisites of an ink formulation or a design or a pattern or a mechanical or chemical or visual attribute. Formulations of the invention may thus be varied by selecting different amounts for components making up the formulations, selecting ratio amounts defining an amount of one component versus another, selecting the addition of additives such as a carbodiimide crosslinker, selecting the conditions and parameters permitting overlaying the formulation on the substrate, etc. The common denominator to all formulations of the invention is their suitability for a variety of substrate materials and their ability to provide a cured film of superior and improved properties as compared to pretreatment formulations of the art.

To begin with, formulations disclosed herein exhibit low viscosities, thereby permitting their application by a variety of means ranging from manual (hand) applications (e.g., wiping, immersing, padding, spraying) to application by a printer. To facilitate strongly adhered pattern onto a substrate, a pretreatment formulation is applied onto a substrate and cured. Once cured, an ink formulation may be applied onto the treated surface, followed by an additional curing step. Curing of the patterned formulation provides a dry solid film or coat or pattern.

According to the invention, a pretreatment formulation of the invention may be applied to a surface region of a substrate prior to application of an ink or pigment formulation. The substrate may be any substrate selected, in some embodiments, from absorptive or non-absorptive materials, natural or synthetic materials (e.g., fabrics and textiles), paper materials (e.g., paper, paperboard, wallpaper), polymeric materials (e.g., made from a polyester, a polyethylene, a polypropylene, vinyl & acrylic banners, PVC banners, leather, metal, wood, corrugated plastic signs, plasticized nylon and blends thereof) and others.

Application of a pretreatment formulation is generic to all types of surfaces; however, it may be more selective towards textile and fabric substrates. Such textile and fabric substrate may be a woven or a non-woven textile material, which may or may not be formed of a natural fiber, a synthetic fiber or a combination of the two.

A cured and dry pretreated surface, may receive an ink formulation by any means and methods known in the art. While common ink printing methods include digital printing, such as inkjet printing may be typically used (i.e., direct to garment (DTG), and roll-to-roll for textile and fabric substrates), transfer printing processes, flexo, roto gravure, direct to film (DTF), offset and screen printing may be similarly used.

The ink formulations may be any such known in the art. The ink formulation may be applied onto any part of the pretreated surface region. Application may proceed wet-on-dry, whereby the applied pretreatment is first allowed to dry and cure. Where the pretreatment formulation is patterned on the surface by printing, spraying manually or via a pretreat machine, it may be patterned only where application of the ink is intended.

The invention further provides a pattern formed of a formulation according to the invention. In some embodiments, the pattern is formed on a surface of a substrate, may be intercalated within or absorbed into the substrate, the substrate being selected from absorptive or non-absorptive materials, natural or synthetic materials, paper materials and polymeric materials. In some embodiments, the substrate is a fabric or a textile.

In some embodiments, the pattern is in a form configured to receive an ink formulation. The pattern may be in a dry form. The pattern may be in a form of uncrosslinked or partially cross-linked form, or a cross-linked dry pattern.

In some embodiments, the pattern is formed on a textile. In some embodiments, the pattern is formed or patterned with an ink formulation which may be white or a (non-white) colored formulation. In some embodiments, the ink formulation is white ink, giving a measurable or a visual L* value between 80 and 93. The L* value is greater than 80 and 93 when measured post laundry of the patterned textile, as disclosed herein.

The invention further provides a pretreated substrate having a film or a pattern in a form of a cured film or pattern, wherein the film or pattern is afforded by applying a formulation according to the invention on the surface of the substrate.

Further provided is a dyed substrate having a film or a pattern of an ink formed on a cured film or pattern afforded by applying a formulation according to the invention on the surface of the substrate. In some embodiments, the ink is white ink giving a measurable or a visual L* value between 80 and 93. The L* value is greater than 80 and 93 when measured post laundry of the patterned substate, as disclosed herein.

The invention further provides a method of forming an ink pattern on a surface, the method comprising coating a surface region of a substrate with a pretreatment formulation according to the invention and patterning an ink formulation on at least a dry portion of the surface region coated with the pretreatment formulation.

Also provided is a method of forming an ink pattern on a surface, the method comprising obtaining a substrate having at least part of its surface region coated with a pretreatment formulation according to the invention and patterning an ink formulation on at least a dry/cured portion of the surface region coated with the pretreatment formulation. In some embodiments, coating with the pretreatment formulation is patterning of a surface region of the substrate.

In some embodiments, the ink formulation is patterned by a means selected from digital printing, direct to garment (DTG), roll-to-roll, transfer printing processes, flexo, roto gravure, direct to film (DTF), offset and screen printing.

The invention further provides a method of forming a pattern on a dry/cured surface region by digital printing, the method comprises patterning a pretreated surface region of a substrate (namely a surface region having received a layer of a pretreatment formulation of the invention) with an ink formulation.

In some embodiments, the method comprises obtaining a pretreatment formulation according to the invention.

In some embodiments, the ink formulation is applied onto a dry/cured region which previously received a pretreatment formulation, while the film or layer or pattern of a pretreatment formulation is allowed to dry before receiving an ink.

As noted herein, a pretreated surface may receive any ink for forming a pattern on an image. The inks may be selected, for example, from reactive inks, acid inks, disperse inks, sublimation inks, pigment inks and others.

As noted herein, the dry pretreatment film provides a suitable substrate onto which an ink composition may be applied, by means of a "wet-on-dry" application. The nature and method of applying the ink formulation is outside the scope disclosed herein.

Cured films formed of formulations of the invention are within the scope of the technology disclosed herein. These cured films are superior to pretreatment films formed from other pretreatment formulations. For example, the performance of an aqueous formulation comprising one metal salt (e.g., calcium chloride) and an acrylic polymer has shown inferiority to the inventors' formulation in means of whiteness reflected in L* values, color vividness, and brilliance. As disclosed herein, when the cured films are overlayed with an ink formulation, the improvement in the cured films becomes apparent. These improvements include:
**(i)** higher whiteness intensity that arises post-laundry;
**(ii)** improved color vividness and brilliance;
**(iii)** enhanced pattern durability and adhesion to a substrate;
**(iv)** superior wash-resistance;
**(v)** shortened ink-curing time durations;
**(vi)** lowering ink-curing temperatures
**(vii)** prolonged utility of the substrate even one- or two-months post-treatment
**(viii)** and others.

One of the main improvements rendered possible by cured films of the invention is the higher L* values of at least 80-93, when the films are formed on textile. As mentioned herein, to determine whiteness of patterned prints, CIELAB color characterization system is typically used, wherein the color-space is defined by three axes L*, a*, b*. The L* values express the perceptual lightness, while setting black at 0 and white at 100. The L* values of the printed patterns or images formed on cured films of the invention, measured post laundry, increased by (at least) 1 to 3 units from the values measured pre-laundry (when visualized after washing the printed textile in a laundry machine compared to the same prints or patterns formed pre-laundry). This phenomenon is highly exceptional since a trend of L* values reduction post-laundry is generally expected.

Thus, the invention further provides a method for improving whiteness of a printed white ink or for increasing the L* value of a pattern formed of a white ink, or for improving vividness of a colored ink (non-white), the process comprising forming the pattern of the ink (white or colored) by applying the ink on a preformed cured film of a formulation of the invention.

The invention further provides a method of forming a pattern of an ink on a surface of a substrate, the method comprising:
- forming on said surface of the substrate a film of a formulation of the invention and curing same, and
- applying said ink onto the surface of the substrate having the cured film.

The invention further provides a wet-on-dry method of application, the application may be manual or by a printing unit, the method comprising providing a cured film of a formulation of the invention and forming a pattern of at least one ink thereon.

Further provided is a method of applying a wet ink formulation on a dry and cured film of a pretreatment formulation, the method comprising
- obtaining a formulation according to the invention;
- forming a film of said formulation onto a surface of a substrate;
- curing said film; and
- applying a wet ink formulation on a surface region of said film.

The process further comprises a step of curing the ink formulation applied onto the surface region.

In some embodiments of all methods disclosed herein, the formulation of the invention comprises
**(i)** at least one metal salt, as defined herein, wherein optionally the metal salt is selected from calcium salts, such as CaCl₂, CaF₂, CaBr₂, CaI₂, calcium carbonate and others, wherein the amount of the salt does not exceed 18wt% or is between 0.5 and 18wt%;
**(ii)** a polymeric mixture, as defined herein, wherein the mixture optionally comprising at least one polymer, copolymer or binder, selected as herein, wherein the mixture comprises an acetate polymer and/or an acrylic polymer, wherein the amount of the mixture does not exceed 18wt% or is between 0.5 and 18wt%;
**(iii)** an ammonium salt in an amount between 0.005 and 0.9wt%,
**(iv)** an epichlorohydrin-modified polyamide in an amount between 0.005 and 0.45wt%, and
**(v)** optionally at least one polycarbodiimide.

In some embodiments, the formulation comprises at least one polycarbodiimide. The amount of the polycarbodiimide in formulations of the invention does not typically exceed 6wt%. In some embodiments, the amount is between 0.5% and 6% w/w.

In some embodiments, the formulations used are any one of the following non-limiting formulations of the invention:
**Formulation 1** comprising:
   A carrier such as water
   A polymer mixture
   A metal salt
   An ammonium salt
   Epichlorohydrin polyamide copolymer.
**Formulation 2** comprising:
   A carrier such as water
   A polymer mixture
   A metal salt
   An ammonium salt
   Epichlorohydrin polyamide copolymer
   At least one polycarbodiimide crosslinker.
**Formulation 3** comprising:
   Water
   A polymer mixture
   A metal salt, such as calcium chloride
   An ammonium salt
   Epichlorohydrin polyamide copolymer.
**Formulation 4** comprising:
   Water
   A polymer mixture
   A metal salt, such as calcium chloride
   An ammonium salt
   Epichlorohydrin polyamide copolymer
   polycarbodiimide crosslinker.
**Formulation 5** comprising:
   A carrier such as water- 62.65-99% w/w
   A polymer mixture- 0.5-18 %w/w
   A metal salt- 0.5-18% w/w
   An ammonium salt- 0.005-0.9% w/w
   Epichlorohydrin polyamide copolymer- 0.005-0.45% w/w.
**Formulation 6** comprising:
   A carrier such as water- 56.65-98.5% w/w
   A polymer mixture- 0.5-18% w/w
   A metal salt- 0.5-18% w/w
   An ammonium salt- 0.005- 0.9% w/w
   Epichlorohydrin polyamide copolymer- 0.005%- 0.45% w/w
   At least one polycarbodiimide crosslinker- 0.5%-6% w/w.
**Formulation 7** comprising:
   Water- 62.65-99% w/w
   A polymer mixture- 0.5-18 %w/w
   A metal salt, such as calcium chloride- 0.5-18% w/w
   An ammonium salt- 0.005-0.9% w/w
   Epichlorohydrin polyamide copolymer- 0.005-0.45% w/w.
**Formulation 8** comprising:
   Water- 56.65-98.5% w/w
   A polymer mixture, as defined herein- 0.5-18% w/w
   A metal salt, such as calcium chloride- 0.5-18% w/w
   An ammonium salt- 0.005- 0.9% w/w
   Epichlorohydrin polyamide copolymer- 0.005%- 0.45% w/w
   polycarbodiimide crosslinker- 0.5%-6% w/w.

Also provided is a kit comprising one or more receptacles or containers, at least one of which comprising a formulation according to the invention, and instructions of use. In some embodiments, the further comprises an ink formulation.

### DETAILED DESCRIPTION OF EMBODIMENTS

In the following, non-limiting examples of pretreatment formulations according to the invention are provided:

**Table 1: A digital wet-on-dry pretreatment formulation according to the invention.**

| **Ingredient** | **Function** | **Amount** |
|---|---|---|
| Deionized water | Carrier | 62.65-99% w/w |
| Mixture of acetate binder and acrylic binder (may contain additional polymeric components and additives) | Ink receptive, anti-migration polymer | 0.5% - 18% w/w |
| Metal salt | Fixating agent | 0.5% - 18% w/w |
| Ammonium salt | Cationic charge adjuster | 0.005% - 0.9% w/w |
| Epichlorohydrin polyamide copolymer | Shrinking inhibitor | 0.005% - 0.45% w/w |

**Table 2: A digital wet-on-dry pretreatment formulation according to the invention.**

| **Ingredient** | **Function** | **Amount** |
|---|---|---|
| Deionized water | Carrier | 56.65-98.5% w/w |
| Mixture of acetate binder and acrylic binder (may contain additional polymeric components and additives) | Ink receptive, anti-migration polymer | 0.5% - 18% w/w |
| Metal salt | Fixating agent | 0.5% - 18% w/w |
| Ammonium salt | Cationic charge adjuster | 0.005% - 0.9% w/w |
| Epichlorohydrin polyamide copolymer | Shrinking inhibitor | 0.005% - 0.45% w/w |
| Polycarbodiimide crosslinker | Adhesion promoter | 0.5% - 6% w/w |

## Claims

1. An aqueous pretreatment formulation comprising
- at least one metal salt,
- a polymeric mixture of polymers, copolymers, or both,
- an ammonium salt,
- an epichlorohydrin-modified polyamide, and
optionally at least one polycarbodiimide,
wherein the formulation is free of a dye or a pigment, an organic acid, an organic base, an organic starch, a starch salt, an isocyanate-based material, borates and borate salts.

2. The formulation according to claim 1, wherein the salt is a calcium salt.

3. The formulation according to any one of claims 1 to 2, the formulation comprising
- at least one metal salt, being in a calcium salt, optionally selected from CaCl₂, CaF₂, CaBr₂, CaI₂, and calcium carbonate, wherein the amount of the salt does not exceed 18wt% or is between 0.5 and 18wt%;
- a polymeric mixture of polymers, copolymers or both,
- an ammonium salt,
- an epichlorohydrin-modified polyamide, and
- optionally at least one polycarbodiimide.

4. The formulation according to any one of the preceding claims, wherein the polymeric mixture is a combination of two or more polymeric components selected to permit dot gain adjustment, allowing distinct ink drop demarcation; to thereby enable high-resolution precision patterns.

5. The formulation according to any one of claims 1 to 4, the formulation comprising
- at least one metal salt selected from calcium salts, wherein the amount of the salt does not exceed 18wt% or is between 0.5 and 18wt%;
- a polymeric mixture comprising an acetate polymer and/or an acrylic polymer;
- an ammonium salt;
- an epichlorohydrin-modified polyamide; and
- optionally at least one polycarbodiimide.

6. The formulation according to any one of the preceding claims, wherein the epichlorohydrin-modified polyamide is an epichlorohydrin polyamide copolymer or polymer; or wherein the epichlorohydrin-modified polyamide is a conjugate of epichlorohydrin and a polyamide copolymer or prepolymer.

7. The formulation according to any one of the preceding claims for use as pretreatment formulation to form an ink receptive film on a substrate.

8. A pattern formed by deposition of a formulation according to any one of claims 1 to 7 on a substrate.

9. The pattern according to claim 8, wherein the pattern is on a textile.

10. The pattern according to claim 8, being formed of a white ink, wherein the pattern having an L* value of at least between 80 and 93.

11. A method of forming an ink pattern on a surface, the method comprising coating a surface region of a substrate with a formulation according to any one of claims 1 to 7 and patterning an ink formulation on a dry portion of the surface region coated with the formulation.

12. A method of forming an ink pattern on a surface, the method comprising obtaining a substrate having at least part of its surface region coated with a formulation according to any one of claims 1 to 7 and patterning an ink formulation on a dry portion of the surface region coated with the formulation.

13. A method of forming a pattern on a dry surface region by digital printing, the method comprises patterning a surface region of a substrate having been coated with a dry film formed of a formulation according to any one of claims 1 to 7, with an ink formulation.

14. The method according to claim 11, wherein the pattern is formed on a textile.

15. A method for forming a pattern of an ink on a surface of a substrate, the method comprising:
- forming on said surface of the substrate a film of a formulation according to any one of claims 1 to 7 and curing same, and
- applying said ink onto the surface of the substrate having the cured film.

16. A method of applying a wet ink formulation on a dry and cured film of a formulation according to any one of claims 1 to 7, the method comprising
- obtaining a formulation according any one of claims 1 to 7;
- forming a film of said formulation onto a surface of a substrate;
- curing said film; and
- applying a wet ink formulation on a surface region of said cured film.

17. The method according to any one of claims 11 to 14, wherein the formulation comprising
- at least one metal salt selected from calcium salts, wherein the amount of the salt does not exceed 18wt% or is between 0.5 and 18wt%;
- a polymeric mixture comprising an acetate polymer and/or an acrylic polymer, wherein the amount of the mixture does not exceed 18wt% or is between 0.5 and 18wt%;
- an ammonium salt in an amount between 0.005 and 0.9wt%,
- an epichlorohydrin-modified polyamide in an amount between 0.005 and 0.45wt%, and
- at least one polycarbodiimide in an amount between 0.5% and 6% w/w.

## Patentansprüche

1. Eine wässrige Vorbehandlungsformulierung, die Folgendes umfasst:
- mindestens ein Metallsalz,
- eine polymere Mischung von Polymeren, Copolymeren oder beiden,
- ein Ammoniumsalz,
- ein epichlorhydrinmodifiziertes Polyamid und optional mindestens ein Polycarbodiimid,
wobei die Formulierung frei von einem Farbstoff oder einem Pigment, einer organischen Säure, einer organischen Base, einer organischen Stärke, einem Stärkesalz, einem isocyanatbasierten Material, Boraten und Boratsalzen ist.

2. Formulierung nach Anspruch 1, wobei das Salz ein Calciumsalz ist.

3. Formulierung nach einem der Ansprüche 1 bis 2, wobei die Formulierung Folgendes umfasst:
- mindestens ein Metallsalz, das in einem Calciumsalz ist, optional ausgewählt aus CaCl₂, CaF₂, CaBr₂, CaI₂ und Calciumcarbonat, wobei die Menge des Salzes 18 Gew.-% nicht überschreitet oder zwischen 0,5 und 18 Gew.-% liegt;
- eine polymere Mischung von Polymeren, Copolymeren oder beiden,
- ein Ammoniumsalz,
- ein epichlorhydrinmodifiziertes Polyamid und
- optional mindestens ein Polycarbodiimid.

4. Formulierung nach einem der vorhergehenden Ansprüche , wobei die polymere Mischung eine Kombination von zwei oder mehr polymeren Komponenten ist, die ausgewählt sind, um eine Einstellung der Tonwertzunahme zu gestatten, was eine deutliche Tintentropfenabgrenzung erlaubt; um somit hochauflösende Präzisionsmuster zu ermöglichen.

5. Formulierung nach einem der Ansprüche 1 bis 4, wobei die Formulierung Folgendes umfasst:
- mindestens ein Metallsalz, ausgewählt aus Calciumsalzen, wobei die Menge des Salzes 18 Gew.-% nicht überschreitet oder zwischen 0,5 und 18 Gew.-% liegt;
- eine polymere Mischung, die ein Acetatpolymer und/oder ein Acrylpolymer umfasst;
- ein Ammoniumsalz;
- ein epichlorhydrinmodifiziertes Polyamid; und
- optional mindestens ein Polycarbodiimid.

6. Formulierung nach einem der vorhergehenden Ansprüche , wobei das epichlorhydrinmodifizierte Polyamid ein Epichlorhydrin-Polyamid-Copolymer oder -Polymer ist; oder wobei das epichlorhydrinmodifizierte Polyamid ein Konjugat von Epichlorhydrin und einem Polyamid-Copolymer oder -Präpolymer ist.

7. Formulierung nach einem der vorhergehenden Ansprüche zur Verwendung als Vorbehandlungsformulierung, um einen tintenaufnahmefähigen Film auf einem Substrat zu bilden.

8. Ein Muster, das durch Aufbringen einer Formulierung nach einem der Ansprüche 1 bis 7 auf ein Substrat gebildet wird.

9. Muster nach Anspruch 8, wobei sich das Muster auf einer Textilie befindet.

10. Muster nach Anspruch 8, das aus einer weißen Tinte gebildet ist, wobei das Muster einen L*-Wert von mindestens zwischen 80 und 93 aufweist.

11. Ein Verfahren zum Bilden eines Tintenmusters auf einer Oberfläche, wobei das Verfahren das Beschichten eines Oberflächenbereichs eines Substrats mit einer Formulierung nach einem der Ansprüche 1 bis 7 und das Mustern einer Tintenformulierung auf einem trockenen Anteil des mit der Formulierung beschichteten Oberflächenbereichs umfasst.

12. Ein Verfahren zum Bilden eines Tintenmusters auf einer Oberfläche, wobei das Verfahren das Erhalten eines Substrats, dessen Oberflächenbereich mindestens teilweise mit einer Formulierung nach einem der Ansprüche 1 bis 7 beschichtet ist, und das Mustern einer Tintenformulierung auf einem trockenen Anteil des mit der Formulierung beschichteten Oberflächenbereichs umfasst.

13. Ein Verfahren zum Bilden eines Musters auf einem trockenen Oberflächenbereich durch digitales Drucken, wobei das Verfahren das Mustern eines Oberflächenbereichs eines Substrats, das mit einem trockenen Film beschichtet wurde, der aus einer Formulierung nach einem der Ansprüche 1 bis 7 gebildet wurde, mit einer Tintenformulierung umfasst.

14. Verfahren nach Anspruch 11, wobei das Muster auf einer Textilie gebildet ist.

15. Ein Verfahren zum Bilden eines Musters aus einer Tinte auf einer Oberfläche eines Substrats, wobei das Verfahren Folgendes umfasst:
- Bilden eines Films einer Formulierung nach einem der Ansprüche 1 bis 7 auf der genannten Oberfläche des Substrats und Aushärten des Films und
- Applizieren der genannten Tinte auf die Oberfläche des Substrats, das den ausgehärteten Film aufweist.

16. Ein Verfahren zum Applizieren einer nassen Tintenformulierung auf einen trockenen und ausgehärteten Film einer Formulierung nach einem der Ansprüche 1 bis 7, wobei das Verfahren Folgendes umfasst:
- Erhalten einer Formulierung nach einem der Ansprüche 1 bis 7;
- Bilden eines Films der genannten Formulierung auf einer Oberfläche eines Substrats;
- Aushärten des genannten Films; und
- Applizieren einer nassen Tintenformulierung auf einem Oberflächenbereich des genannten ausgehärteten Films.

17. Verfahren nach einem der Ansprüche 11 bis 14, wobei die Formulierung Folgendes umfasst:
- mindestens ein Metallsalz, ausgewählt aus Calciumsalzen, wobei die Menge des Salzes 18 Gew.-% nicht überschreitet oder zwischen 0,5 und 18 Gew.-% liegt;
- eine polymere Mischung, die ein Acetatpolymer und/oder ein Acrylpolymer umfasst, wobei die Menge der Mischung 18 Gew.-% nicht überschreitet oder zwischen 0,5 und 18 Gew.-% liegt;
- ein Ammoniumsalz in einer Menge zwischen 0,005 und 0,9 Gew.-%,
- ein epichlorhydrinmodifiziertes Polyamid in einer Menge zwischen 0,005 und 0,45 Gew.-% und
- mindestens ein Polycarbodiimid in einer Menge zwischen 0,5% und 6% Gew./Gew.

## Revendications

1. Formulation aqueuse de prétraitement comprenant
- au moins un sel métallique,
- un mélange polymère de polymères, de copolymères ou des deux,
- un sel d'ammonium,
- un polyamide modifié par épichlorhydrine, et optionnellement au moins un polycarbodiimide,
la formulation étant exempte d'un colorant ou d'un pigment, d'un acide organique, d'une base organique, d'un amidon organique, d'un sel d'amidon, d'un matériau à base d'isocyanates, de borates et de sels de borate.

2. Formulation selon la revendication 1, dans laquelle le sel est un sel de calcium.

3. Formulation selon l'une quelconque des revendications 1 ou 2, la formulation comprenant
- au moins un sel métallique, lequel est dans un sel de calcium, optionnellement sélectionné parmi CaCl₂, CaF₂, CaBr₂, Cal₂, et le carbonate de calcium, la quantité du sel ne dépassant pas 18 % en poids ou étant comprise entre 0,5 et 18 % en poids ;
- un mélange polymère de polymères, de copolymères ou des deux,
- un sel d'ammonium,
- un polyamide modifié par épichlorhydrine, et
- optionnellement au moins un polycarbodiimide.

4. Formulation selon l'une quelconque des revendications précédentes, dans laquelle le mélange polymère est une combinaison de deux ou plusieurs composants polymères sélectionnés pour permettre un ajustement de l'engraissement des points, en permettant une démarcation distincte des gouttes d'encre ; pour pouvoir obtenir ainsi des motifs de précision à haute résolution.

5. Formulation selon l'une quelconque des revendications 1 à 4, la formulation comprenant
- au moins un sel métallique sélectionné parmi des sels de calcium, la quantité du sel ne dépassant pas 18 % en poids ou étant comprise entre 0,5 et 18 % en poids ;
- un mélange polymère comprenant un polymère d'acétate et/ou un polymère acrylique ;
- un sel d'ammonium,
- un polyamide modifié par épichlorhydrine ; et
- optionnellement au moins un polycarbodiimide.

6. Formulation selon l'une quelconque des revendications précédentes, dans laquelle le polyamide modifié par épichlorhydrine est un copolymère ou un polymère d'épichlorhydrine-polyamide ; ou dans laquelle le polyamide modifié par épichlorhydrine est un conjugué d'épichlorhydrine et d'un copolymère ou d'un prépolymère de polyamide.

7. Formulation selon l'une quelconque des revendications précédentes, destinée à une utilisation comme formulation de prétraitement pour former un film récepteur d'encre sur un substrat.

8. Motif formé par dépôt d'une formulation selon l'une quelconque des revendications 1 à 7 sur un substrat.

9. Motif selon la revendication 8, le motif se trouvant sur un textile.

10. Motif selon la revendication 8, lequel est formé d'une encre blanche, le motif ayant une valeur L * d'au moins 80 à 93.

11. Procédé de formation d'un motif d'encre sur une surface, le procédé comprenant le revêtement d'une région de surface d'un substrat avec une formulation selon l'une quelconque des revendications 1 à 7 et la formation d'un motif avec une formulation d'encre sur une partie sèche de la région de surface revêtue de la formulation.

12. Procédé de formation d'un motif d'encre sur une surface, le procédé comprenant l'obtention d'un substrat dont au moins une partie de la région de surface est revêtue d'une formulation selon l'une quelconque des revendications 1 à 7 et la formation d'un motif avec une formulation d'encre sur une partie sèche de la région de surface revêtue de la formulation.

13. Procédé de formation d'un motif sur une région de surface sèche par impression numérique, le procédé comprenant la formation d'un motif sur une région de surface d'un substrat ayant été revêtue d'un film sec formé d'une formulation selon l'une quelconque des revendications 1 à 7, avec une formulation d'encre.

14. Procédé selon la revendication 11, dans lequel le motif est formé sur un textile.

15. Procédé de formation d'un motif constitué d'une encre sur une surface d'un substrat, le procédé comprenant :
- la formation sur ladite surface du substrat d'un film constitué d'une formulation selon l'une quelconque des revendications 1 à 7 et le durcissement de celui-ci, et
- l'application de ladite encre sur la surface du substrat portant le film durci.

16. Procédé d'application d'une formulation d'encre humide sur un film sec et durci constitué d'une formulation selon l'une quelconque des revendications 1 à 7, le procédé comprenant
- l'obtention d'une formulation selon l'une quelconque des revendications 1 à 7 ;
- la formation d'un film constitué de ladite formulation sur la surface d'un substrat ;
- le durcissement dudit film ; et
- l'application d'une formulation d'encre humide sur une région de surface dudit film durci.

17. Procédé selon l'une quelconque des revendications 11 à 14, dans lequel la formulation comprend
- au moins un sel métallique sélectionné parmi des sels de calcium, la quantité du sel ne dépassant pas 18 % en poids ou étant comprise entre 0,5 et 18 % en poids ;
- un mélange polymère comprenant un polymère d'acétate et/ou un polymère acrylique, la quantité du mélange ne dépassant pas 18 % en poids ou étant comprise entre 0,5 et 18 % en poids ;
- un sel d'ammonium dans une quantité comprise entre 0,005 et 0,9 % en poids,
- un polyamide modifié par épichlorhydrine dans une quantité comprise entre 0,005 et 0,45 % en poids, et
- au moins un polycarbodiimide dans une quantité comprise entre 0,5 % et 6 % p/p.
